# EUROPEAN PATENT APPLICATION

(11) **EP 4 554 316 A1**
(43) Date of publication of application: **14.05.2025**
(21) Application number: 22949912.4
(22) Date of filing: 08.07.2022
(51) Int. Cl.: H04W 76/14, H04W 76/18

(54) **SIDELINK CONFIGURATION METHOD AND APPARATUS, AND STORAGE MEDIUM AND TERMINAL**

(71) Applicant: Beijing Xiaomi Mobile Software Co., Ltd., Beijing 100085 (CN)
(72) Inventor: YANG, Xing, Beijing 100085 (CN)
(74) Representative: Stöckeler, Ferdinand
(86) International application number: PCT/CN2022/104732
(87) International publication number: WO 2024/007331

(57) **Abstract**

A sidelink configuration method and apparatus, and a storage medium and a terminal. The method comprises: determining a target duration for a timer according to a sending path of a first RRC message, wherein the first RRC message is a message of a sidelink sent by a first terminal to a second terminal, and the timer is used for indicating, when timing times out, that a radio link failure occurs in the sidelink; and configuring the timer according to the target duration for the timer.

## Description

### TECHNICAL FIELD

The disclosure relates to the field of communication technologies, in particular to a sidelink configuration method, a sidelink configuration apparatus, a storage medium and a terminal.

### BACKGROUND

With development of wireless communication technologies, mobile communication network is gradually evolving towards a 5th generation (5G) new radio (NR) system. In the 5G NR system, there is introduced sidelink technology, that is, user equipments (UEs) communicate with each other directly through wireless resources.

In related art, a timer is started when a UE sends a radio resource control (RRC) reconfiguration message to a target terminal to request to establish a sidelink. A radio link failure (RLF) occurring on the sidelink may be triggered in a case of expiry. Therefore, how to configure a duration of the timer has become an urgent technical problem to be solved.

### SUMMARY

In order to overcome the problems existing in the related art, the disclosure provides a sidelink configuration method, a sidelink configuration apparatus, a storage medium and a terminal.

According to a first aspect of embodiments of the disclosure, there is provided a sidelink configuration method. The method includes:
determining a target duration for a timer according to a transmission path of a first radio resource control (RRC) message, in which the first RRC message is a sidelink message sent by the first terminal to a second terminal, and the timer is used for indicating that a radio link failure occurs in the sidelink in a case of expiry; and
configuring the timer according to the target duration for the timer.

Optionally, determining the target duration for the timer according to the transmission path of the first RRC message, includes:
determining the target duration for the timer according to a correspondence relationship between different types of transmission paths and durations of the timer.

Optionally, determining the target duration for the timer according to the correspondence relationship between different types of transmission paths and durations of the timer, includes:
in response to the transmission path comprising a first sidelink, determining the target duration for the timer according to a correspondence relationship between the first sidelink and a duration of the timer, in which the first sidelink is a link where the first terminal directly sends the first RRC message to the second terminal.

Optionally, determining the target duration for the timer according to the correspondence relationship between different types of transmission paths and durations of the timer, includes:
in response to the transmission path including a second sidelink, determining the target duration for the timer according to a correspondence relationship between the second sidelink and a duration of the timer, in which the second sidelink is a link where the first terminal sends the first RRC message to the second terminal via at least one relay terminal.

Optionally, determining the target duration for the timer according to the transmission path of the first RRC message, includes:
in response to the transmission path including a second sidelink, determining the target duration for the timer according to a type of relay terminal or a number of relay terminals included in the second sidelink, in which the second sidelink is a link where the first terminal sends the first RRC message to the second terminal via at least one relay terminal.

Optionally, determining the target duration for the timer according to the transmission path of the first RRC message, includes:
in response to the transmission path comprising a second sidelink, determining the target duration for the timer according to types of sub-links or a number of sub-links included in the second sidelink, in which the second sidelink is a link where the first terminal sends the first RRC message to the second terminal via at least one relay terminal.

Optionally, determining the target duration for the timer according to the transmission path of the first RRC message, includes:
in response to the first terminal sending the first RRC message to the second terminal for a first time, determining the target duration for the timer according to the transmission path of the first RRC message.

Optionally, after determining the target duration for the timer according to the transmission path of the first RRC message, the method includes:
configuring the timer according to a preset duration sent by the second terminal, in which the preset duration is a duration corresponding to the timer when the first terminal sends the first RRC message to the second terminal again.

Optionally, the preset duration is sent by the second terminal to the first terminal through a second RRC message.

Optionally, the correspondence relationship is obtained by at least one of following steps:
obtaining the correspondence relationship between different types of transmission paths and durations of the timer according to a system message sent by a network device;
obtaining the correspondence relationship between different types of transmission paths and durations of the timer according to an RRC reconfiguration message sent by the network device; or
obtaining the correspondence relationship between different types of transmission paths and durations of the timer by preconfiguring different durations of the timer for different types of transmission paths.

Optionally, the timer is a T400 timer.

Optionally, the first RRC message is a sidelink RRC reconfiguration message.

According to a second aspect of embodiments of the disclosure, there is provided a sidelink configuration apparatus. The apparatus is applied to a first terminal, and includes:
a determination module, configured to determine a target duration for a timer according to a transmission path of a first radio resource control (RRC) message, in which the first RRC message is a sidelink message sent by the first terminal to a second terminal, and the timer is used for indicating that a radio link failure occurs in the sidelink in a case of expiry; and
a timer configuration module, configured to configure the timer according to the target duration for the timer.

According to a third aspect of embodiments of the disclosure, there is provided a terminal. The terminal includes:
a processor;
a memory for storing instructions executable by the processor;
in which the processor is configured to execute the instructions to implement the sidelink configuration method provided in the first aspect of the disclosure.

According to a fourth aspect of embodiments of the disclosure, there is provided a computer-readable storage medium having stored thereon computer program instructions. When the computer program instructions are executed by a processor, steps of the sidelink configuration method provided in the first aspect of the disclosure are implemented.

The technical schemes provided by the embodiments of the disclosure include the following beneficial effects. The target duration for the timer is determined according to the transmission path of the first RRC message, and the duration of the timer is configured according to the target duration for the timer, so that the duration of the timer matches the transmission path of the first RRC message, so as to avoid early or delayed triggering of radio link failure (RLF) of the sidelink.

It is understood that the foregoing general description and following detailed descriptions are exemplary and explanatory only and cannot limit the disclosure.

### BRIEF DESCRIPTION OF THE DRAWINGS

The above-mentioned and/or additional aspects and advantages of the disclosure will be apparent and easily understood from the following descriptions of embodiments in combination with the accompanying drawings.
FIG. 1 illustrates an application scenario where a sidelink configuration method is applicable according to some embodiments.
FIG. 2 illustrates another application scenario where a sidelink configuration method is applicable according to some embodiments.
FIG. 3 is a flowchart illustrates a sidelink configuration method according to some embodiments.
FIG. 4 is a flowchart illustrates another sidelink configuration method according to some embodiments.
FIG. 5 is a flowchart illustrates another sidelink configuration method according to some embodiments.
FIG. 6 is a flowchart illustrates another sidelink configuration method according to some embodiments.
FIG. 7 is a flowchart illustrates another sidelink configuration method according to some embodiments.
FIG. 8 is a flowchart illustrates another sidelink configuration method according to some embodiments.
FIG. 9 is a flowchart illustrates another sidelink configuration method according to some embodiments.
FIG. 10 is a flowchart illustrates another sidelink configuration method according to some embodiments.
FIG. 11 is a block diagram of a sidelink configuration apparatus according to some embodiments.
FIG. 12 is a block diagram of a terminal according to some embodiments.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with embodiments of the disclosure. Instead, they are merely examples of apparatuses and methods consistent with aspects related to the disclosure as recited in the appended claims.

In related art, in order to support direct communication between a user equipment (UE)1 and a UE2, sidelink technology is introduced. The UE1 and UE2 both use a PC5 interface. After establishing a unicast connection between the UE1 and UE2, the UE1 sends an RRCReconfigurationSidelink message (which is an RRC reconfiguration message) to the UE2. The RRCReconfigurationSidelink message carries configuration information sent to the UE2, and the configuration information includes a logical channel identifier. The UE1 starts a timer after sending the RRCReconfigurationSidelink message.

When the UE1 receives an RRCReconfigurationCompleteSidelink or RRCReconfigurationFailureSidelink message sent by the UE2, it stops the timer. If the timer is expired, it will trigger a radio link failure (RLF) occurring on the sidelink, and release the PC5 interface and resources used for sidelink.

In response to receiving the RRCReconfigurationSidelink message sent by the UE1, if the configuration information carried in the RRCReconfigurationSidelink message is applicable, the UE2 replies to UE1 with the RRCReconfigurationCompleteSidelink message, makes the configuration information effective, and the UE1 stops the timer.

In response to receiving the RRCReconfigurationSidelink message sent by the UE1, if the configuration information carried in the RRCReconfigurationSidelink message is inapplicable, the UE2 replies to the UE1 with the RRCReconfigurationFailureSidelink message, does not make that the configuration information effective, and the UE1 stops the timer.

In the related art, the duration of the timer is generally configured by a network device or a peer-end UE. Generally, the configured duration is fixed, which leads to the fact that in some cases, RLF has actually occurred in the UE, but triggering of RLF may be delayed because the duration of the timer is too long. Or, in some cases, RLF has not occurred in the UE, but the duration of the timer is too short, which leads to early expiry of the timer, and thus the UE may trigger RLF in advance.

In view of the above technical problems, the disclosure proposes a sidelink configuration method. The target duration for the timer is determined according to the transmission path of the first RRC message, and the duration of the timer is configured according to the target duration for the timer, so that the duration of the timer can be determined according to the transmission path of the first RRC message, so as to avoid early or delayed triggering of the sidelink RLF.

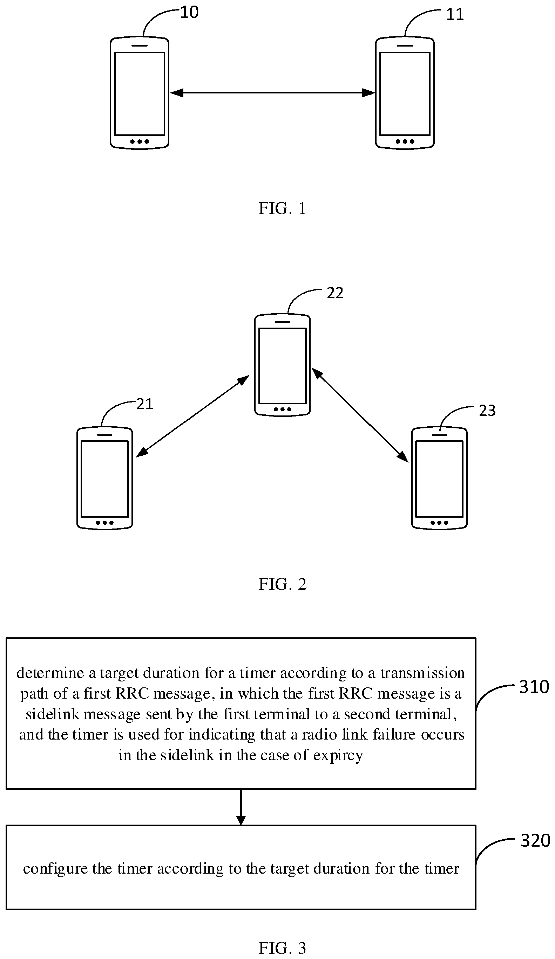

As illustrated in FIG. 1, FIG. 1 illustrates an application scenario where a sidelink configuration method is applicable according to some embodiments. For convenience of explanation, only parts related to the embodiments are shown.

As illustrated in FIG. 1, this application scenario includes a first terminal 11 and a second terminal 12. The first terminal 11 and the second terminal 12 can communicate with each other using sidelink through a PC5 interface. It should be understood that in the application scenario shown in FIG. 1, the first terminal 11 and the second terminal 12 communicate directly via a sidelink.

The first terminal 11 and the second terminal 12 may be UEs or other terminal devices, such as mobile phones, tablet personal computers, laptop computers, personal digital assistants (PDAs), Mobile Internet Device (MIDs), wearable devices, smart cars, vehicle-mounted devices or robots. It is worth noting that in the disclosure, the specific types of terminals are not limited.

As illustrated in FIG. 2, FIG. 2 illustrates another application scenario where a sidelink configuration method is applicable according to some embodiments. For convenience of explanation, only parts related to the embodiments are shown.

As illustrated in FIG. 2, this application scenario includes a third terminal 21, a relay terminal 22 and a fourth terminal 23. The third terminal 21 and the relay terminal 22 can communicate with each other using sidelink through a PC5 interface. The relay terminal 22 and the fourth terminal 23 can communicate with each other using sidelink through a PC5 interface.

It should be understood that in the application scenario shown in FIG. 2, the third terminal 21 and the fourth terminal 23 realize sidelink communication through a relay, i.e., the relay terminal 22. This architecture is called a UE to UE (U2U) relay. It should be noted that although only one relay terminal 22 is shown in FIG. 2, in practical applications, sidelink communication between the third terminal 21 and the fourth terminal 23 can be realized through a plurality of relay terminals.

FIG. 3 is a flowchart illustrating a sidelink configuration method according to some embodiments. As illustrated in FIG. 3, the sidelink configuration method is performed by a first terminal. The method includes the following steps.

At step 310, a target duration for a timer is determined according to a transmission path of a first RRC message, in which the first RRC message is a sidelink message sent by the first terminal to a second terminal, and the timer is used for indicating that an RLF occurs in the sidelink in a case of expiry.

When a parameter configuration of the sidelink between the first terminal and the second terminal is changed, the first terminal sends a first RRC message to the second terminal. The first RRC message may be a sidelink RRC reconfiguration message, for example, an RRCReconfigurationSidelink message. The first RRC message may carry configuration information for sidelink communication.

There are at least two types of transmission paths of the first RRC message, namely, a first sidelink and a second sidelink. The first sidelink refers to a link where the first terminal directly sends the first RRC message to the second terminal. In the first sidelink, the first terminal directly maintains a unicast connection with the second terminal. Certainly, in some cases, the first sidelink may also be called as a direct sidelink. It is worth noting that the first terminal directly sends the first RRC message to the second terminal means that the first terminal sends the first RRC message to the second terminal without relay terminal. The second sidelink refers to a link where the first terminal sends the first RRC message to the second terminal through at least one relay terminal. In the second sidelink, the first terminal maintains a unicast connection with the second terminal through at least one relay terminal. Certainly, in some cases, the second sidelink may also be called as an indirect sidelink.

For different transmission paths of the first RRC message, the target duration for the timer may be determined to be different. It is worth noting that the target duration for the timer may indicate how long it takes to complete sending a first RRC message and receiving an RRC message fed back by the second terminal on the transmission path.

At step 320, the timer is configured according to the target duration for the timer.

The timer is configured according to the target duration for the timer, which means that a timing duration of the timer is set to the target duration and then the timer is started. The timer is used to indicate an occurrence of RLF on the sidelink in a case of expiry. In some embodiments, the timer is a T400 timer.

For example, when the first terminal sends the first RRC message to the second terminal, the target duration for the timer is determined according to the transmission path of the first RRC message. The timing duration of the timer is set to the target duration, and then the timer is started. If the first terminal receives the RRC message fed back by the second terminal in response to the first RRC message, the timer is stopped. For example, when the first terminal receives the RRCReconfigurationCompleteSidelink or RRCReconfigurationFailureSidelink message replied by the second terminal, it stops the timing of the timer. If the first terminal does not receive the RRC message fed back by the second terminal, the timer expires, and the RLF occurring in the sidelink is triggered.

It should be understood that although the timer is stopped, it does not mean that the configuration information carried in the first RRC message takes effect, and whether it is effective may be determined according to information replied by the second terminal. For example, if the second terminal replies with the RRCReconfigurationCompleteSidelink message, it means that the configuration information in the first RRC message is effective, and sidelink communication is established. If the second terminal replies with the RRCReconfigurationFailureSidelink message, it means that the configuration information in the first RRC message is invalid.

Therefore, according to the transmission path of the first RRC message, the target duration for the timer is determined. The timer is configured according to the target duration for the timer, so that the duration of the timer matches the transmission path of the first RRC message, to avoid early or delayed triggering of the RLF of the sidelink. For example, the time required for the second sidelink is longer than that for the first sidelink. If a uniform timer is used, the triggering of the RLF of the second sidelink will be advanced or the triggering of the RLF of the first sidelink will be delayed. Based on the sidelink configuration method proposed in the embodiments of the present disclosure, the corresponding timer duration can be configured pertinently according to different transmission paths, so as to avoid early or delayed triggering of sidelink RLF.

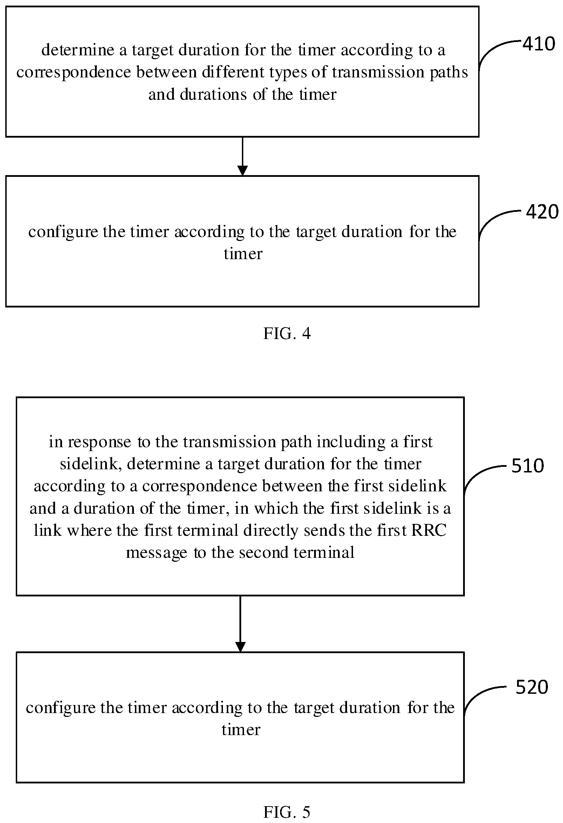

FIG. 4 is a flowchart illustrating a sidelink configuration method according to some embodiments. As illustrated in FIG. 4, the sidelink configuration method includes the following steps.

At step 410, a target duration for a timer corresponding to a transmission path of a first RRC message is determined according to a correspondence relationship between different types of transmission paths and durations of the timer.

With regard to the definition of the first RRC message reference may be made to the relevant description in step 310 of the embodiments shown in FIG. 3, which is not repeated here.

The first terminal determines the target duration for the timer corresponding to the transmission path of the first RRC message according to the correspondence relationship between different types of transmission paths and durations of the timer. For example, according to the transmission path of the first RRC message, the duration of the timer corresponding to the transmission path is determined from the correspondence relationship.

The types of transmission paths at least include a first sidelink and a second sidelink. The first sidelink refers to a link where the first terminal directly sends the first RRC message to the second terminal. In the first sidelink, the first terminal directly maintains a unicast connection with the second terminal. Certainly, in some cases, the first sidelink may also be called as a direct sidelink. It is worth noting that the first terminal directly sends the first RRC message to the second terminal means that the first terminal sends the first RRC message to the second terminal without relay terminal. The second sidelink refers to a link where the first terminal sends the first RRC message to the second terminal through at least one relay terminal. In the second sidelink, the first terminal maintains a unicast connection with the second terminal through at least one relay terminal. Certainly, in some cases, the second sidelink may also be called as an indirect sidelink.

The correspondence relationship includes different types of transmission paths and their corresponding durations of the timer. For example, the first sidelink corresponds to a first duration of the timer, and the second sidelink corresponds to a second duration of the timer.

In some possible implementations, under each type of transmission path, the corresponding duration of the timer is determined according to the specific path of each transmission path. For example, the second sidelink may include a second sidelink including one relay terminal and a second sidelink including a plurality of relay terminals. For the second sidelink including one relay terminal, a third duration of the timer is determined. For the second sidelink including a plurality of relay terminals, a fourth duration of the timer is determined.

It should be noted that the third duration and the fourth duration may be obtained according to sub-links included in the corresponding second sidelinks. The sub-links include a link between the first terminal and a relay terminal, a link between relay terminals, and a link between a relay terminal and the second terminal.

In some embodiments, the correspondence relationship between different types of transmission paths and durations of the timer may be obtained according to a system message sent by a network device.

The first terminal may obtain the correspondence relationship from the system message sent by the network device. The system message carries the correspondence relationship between different types of transmission paths and durations of the timer.

In some embodiments, the correspondence relationship between different types of transmission paths and durations of the timer may be obtained according to an RRC reconfiguration message sent by the network device.

The first terminal may obtain the correspondence relationship from the RRC reconfiguration message sent by the network device. The RRC reconfiguration message carries the correspondence relationship between different types of transmission paths and durations of the timer. It is worth noting that the RRC reconfiguration message may be a sidelink RRC reconfiguration message.

In some embodiments, different durations of the timer are pre-configured for different types of transmission paths, and the correspondence relationship between different types of transmission paths and durations of the timer may be obtained.

The first terminal may store the pre-configured correspondence relationship between different types of transmission paths and durations of the timer. For different types of transmission paths, a corresponding duration of the timer may be configured for each transmission path.

At step 420, the timer is configured according to the target duration for the timer.

Configuring the timer according to the target duration for the timer is setting the timing duration of the timer to the target duration for the timer and starting the timer. The timer is used for indicating that an RLF occurs in the sidelink in a case of expiry. In some embodiments, the timer is a T400 timer.

It should be understood that with regard to how the timer indicates that an RLF occurs in the sidelink in a case of expiry reference may be made to the related description of step 320 in the embodiments shown in FIG. 3, which is not repeated here.

For example, when the first terminal sends the first RRC message to the second terminal, the target duration for the timer is determined according to the transmission path of the first RRC message, and the timing duration of the timer is set to be the target duration for the timer and the timer is started. If the first terminal receives an RRC message fed back by the second terminal in response to the first RRC message, the timer is stopped. For example, when the first terminal receives the RRCReconfigurationCompleteSidelink or the RRCReconfigurationFailureSidelink message replied by the second terminal, the timer is stopped. If the first terminal does not receive an RRC message fed back by the second terminal, the timer is expired and triggers an RLF occurring on the sidelink.

It should be understood that stopping the timer does not mean that the configuration information carried in the first RRC message takes effect, and whether it is effective may be determined according to information replied by the second terminal. For example, if the second terminal replies with the RRCReconfigurationCompleteSidelink message, it means that the configuration information in the first RRC message is effective, and sidelink communication is established. If the second terminal replies with the RRCReconfigurationFailureSidelink message, it means that the configuration information in the first RRC message is invalid.

It is worth noting that every time the first terminal sends the first RRC message to the second terminal, the target duration for the timer may be determined according to the transmission path of the first RRC message. Certainly, when the first terminal sends the first RRC message to the second terminal for the first time, the target duration for the timer may be determined according to the transmission path of the first RRC message, and before sending the first RRC message to the second terminal again, the target duration for the timer may be determined according to a duration sent by the second terminal.

Therefore, according to the transmission path of the first RRC message, the target duration for the timer is determined, and the timer is configured according to the target duration for the timer, so that the duration of the timer matches the transmission path of the first RRC message, so as to avoid early or delayed triggering of sidelink RLF. In the case that the duration required for the second sidelink is longer than that of the first sidelink, if the duration of the timer is set uniformly, the triggering of the RLF of the second sidelink may be advanced, or the triggering of the RLF of the first sidelink may be delayed. Based on the sidelink configuration method proposed in the embodiments of the disclosure, the corresponding duration of the timer can be configured pertinently for different transmission paths, so as to avoid early or delayed triggering of sidelink RLF.

FIG. 5 is a flowchart illustrating a sidelink configuration method according to some embodiments. As illustrated in FIG. 5, the sidelink configuration method includes the following steps.

At step 510, in response to the transmission path of the first RRC message including a first sidelink, determining the target duration for the timer according to a correspondence relationship between the first sidelink and a duration of the timer. The first sidelink is a link where the first terminal directly sends the first RRC message to the second terminal.

With regard to definition of the first RRC message reference may be made to the relevant description in step 310 of the embodiments shown in FIG. 3, which is not repeated here.

The first sidelink refers to a link where the first terminal directly sends the first RRC message to the second terminal. In the first sidelink, the first terminal directly maintains a unicast connection with the second terminal. Certainly, in some cases, the first sidelink may also be called as a direct sidelink. It is worth noting that the first terminal directly sends the first RRC message to the second terminal means that the first terminal sends the first RRC message to the second terminal without relay terminal.

When the transmission path of the first RRC message is the first sidelink, the target duration for the timer corresponding to the transmission path of the first RRC message is determined according to the correspondence relationship between the first sidelink and a duration of the timer.

In some embodiments, a direct sidelink of the same type as the first sidelink may correspond to the same duration of the timer. Certainly, in some other embodiments, different direct sidelinks in the first sidelink may correspond to different durations of the timer.

It is worth noting that the correspondence relationship between the first sidelink and the duration of the timer may be pre-configured, or obtained according to a system message sent by a network device, or obtained according to an RRC reconfiguration message sent by a network device.

At step 520, the timer is configured according to the target duration for the timer.

Configuring the timer according to the target duration for the timer is setting the timing duration of the timer to be the target duration and starting the timer. The timer is used for indicating that an RLF occurs in the sidelink in a case of expiry. In some embodiments, the timer is a T400 timer.

It should be understood that with regard to how the timer indicates that an RLF occurs in the sidelink in a case of expiry reference may be made to the related description of step 320 in the embodiment shown in FIG. 3, which is not repeated here.

It is worth noting that every time the first terminal sends the first RRC message to the second terminal through the first sidelink, the target duration for the timer is determined according to the first sidelink of the first RRC message. Certainly, when the first terminal sends the first RRC message to the second terminal for the first time, the target duration for the timer may be determined according to the first sidelink of the first RRC message, and before the first terminal sends the first RRC message to the second terminal again, the target duration for the timer may be determined according to a duration sent by the second terminal.

Therefore, in a case that the transmission path of the first RRC message is the first sidelink, the target duration for the timer is determined according to the correspondence relationship between the first sidelink and a duration of the timer, so that the duration of the timer matches the duration of sending the first RRC message through the first sidelink, so as to avoid early or delayed triggering of sidelink RLF.

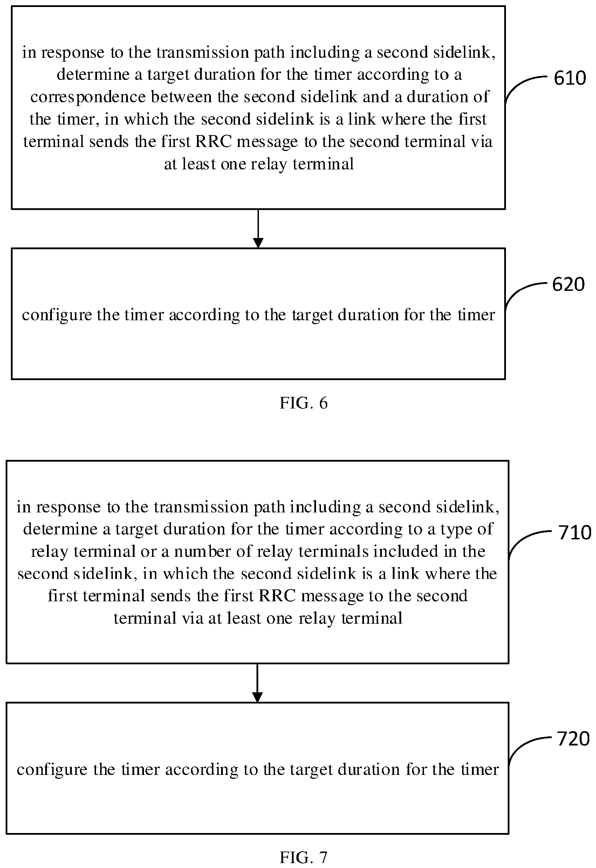

FIG. 6 is a flowchart illustrating a sidelink configuration method according to some embodiments. As illustrated in FIG. 6, the sidelink configuration method includes the following steps.

At step 610, in response to the transmission path of the first RRC message including a second sidelink, the target duration for the timer corresponding to the second sidelink is determined according to a correspondence relationship between the second sidelink and a duration of the timer, in which the second sidelink is a link where the first terminal sends the first RRC message to the second terminal via at least one relay terminal.

With regard to the definition of the first RRC message reference may be made to the relevant description in step 310 of the embodiment shown in FIG. 3, which is not repeated here.

The second sidelink refers to a link where the first terminal sends the first RRC message to the second terminal through at least one relay terminal. In the second sidelink, the first terminal maintains a unicast connection with the second terminal through at least one relay terminal. Certainly, in some cases, the second sidelink may also be called as an indirect sidelink.

If the transmission path of the first RRC message is the second sidelink, the target duration for the timer corresponding to the transmission path of the first RRC message is determined according to the correspondence relationship between the second sidelink and the duration of the timer.

In some embodiments, an indirect sidelink of the same type as the second sidelink may correspond to the same duration of the timer. That is, as long as an indirect sidelink belongs to the second sidelink, it corresponds to the same duration of the timer. Certainly, in some other embodiments, different indirect sidelinks in the second sidelink may correspond to different durations. For example, the second sidelink may include a second sidelink including one relay terminal and a second sidelink including a plurality of relay terminals. The second sidelink including one relay terminal corresponds to a third duration of the timer; and the second sidelink including a plurality of relay terminals corresponds to a fourth duration of the timer.

It is worth noting that the correspondence relationship between the second sidelink and the duration of the timer may be pre-configured, or obtained according to a system message sent by a network device, or obtained according to an RRC reconfiguration message sent by a network device.

At step 620, the timer is configured according to the target duration for the timer.

Configuring the timer according to the target duration for the timer is setting the timing duration of the timer to the target duration and starting the timer. The timer is used for indicating that an RLF occurs in the sidelink in a case of expiry. In some embodiments, the timer is a T400 timer.

It should be understood that with regard to how the timer indicates that an RLF occurs in the sidelink in a case of expiry reference may be made to the related description of step 320 in the embodiment shown in FIG. 3, which is not repeated here.

It is worth noting that every time the first terminal sends the first RRC message to the second terminal through the second sidelink, the target duration for the timer is determined according to the second sidelink of the first RRC message. Certainly, when the first terminal sends the first RRC message to the second terminal for the first time, the target duration for the timer may be determined according to the second sidelink of the first RRC message, and before the first terminal sends the first RRC message to the second terminal again, the target duration for the timer may be determined according to a duration sent by the second terminal.

Therefore, in a case that the transmission path of the first RRC message is the second sidelink, the target duration for the timer is determined according to the correspondence relationship between the second sidelink and a duration of the timer, so that the timing duration of the timer matches the duration of sending the first RRC message through the second sidelink, so as to avoid early or delayed triggering of sidelink RLF.

FIG. 7 is a flowchart illustrating a sidelink configuration method according to some embodiments. As illustrated in FIG. 7, the sidelink configuration method includes the following steps.

At step 710, in response to the transmission path including a second sidelink, the target duration for the timer corresponding to the second sidelink is determined according to a type of relay terminal or a number of relay terminals included in the second sidelink, in which the second sidelink is a link where the first terminal sends the first RRC message to the second terminal via at least one relay terminal.

With regard to how the definition of the first RRC message reference may be made to the relevant description in step 310 of the embodiment shown in FIG. 3, which is not repeated here.

The second sidelink refers to a link where the first terminal sends the first RRC message to the second terminal through at least one relay terminal. In the second sidelink, the first terminal maintains a unicast connection with the second terminal through at least one relay terminal. Certainly, in some cases, the second sidelink may also be called as an indirect sidelink.

In some embodiments, the target duration for the timer may be determined according to a type of relay terminal included in the second sidelink and the correspondence relationship between different types of relay terminals and durations of the timer.

The type of relay terminal refers to a specific relay terminal. For example, for the second sidelink of "first terminal-relay terminal A-second terminal", the type of relay terminal included in the second sidelink is "relay terminal A". For the second sidelink of "first terminal-relay terminal B-second terminal", the type of relay terminal included in the second sidelink is "relay terminal B". For the second sidelink of "first terminal-relay terminal A-relay terminal B-second terminal", the types of relay terminals include "relay terminal A" and "relay terminal B". The correspondence relationship may be that the second sidelink of "first terminal-relay terminal A-second terminal" corresponds to a duration of the timer, and the second sidelink of "first terminal-relay terminal B-second terminal" corresponds to another duration of the timer.

It should be understood that the second sidelink may be differentiated according to the type of relay terminal included in it. For example, the second sidelink of "first terminal-relay terminal A-second terminal" is different from the second sidelink of "first terminal-relay terminal B-second terminal", they correspond to different durations of the timer.

It is worth noting that the correspondence relationship between the type of relay terminal and the duration of the timer may be pre-configured, or obtained according to a system message sent by a network device, or obtained according to an RRC reconfiguration message sent by a network device.

In some examples, the correspondence relationship between the type of relay terminal and the duration of the timer may be obtained through the following steps: determining a sub-link included in the second sidelink according to the type of relay terminal; determining a corresponding duration of the timer according to a duration corresponding to the sub-link; and obtaining the correspondence relationship according to the determined duration of the timer and the type of relay terminal.

For example, for the second sidelink of "first terminal-relay terminal A-relay terminal B-second terminal", the included sub-links are "first terminal-relay terminal A", "relay terminal A-relay terminal B" and "relay terminal B-second terminal". The duration corresponding to each sub-link may be different, so the duration of the timer corresponding to the second sidelink may be obtained according to a sum of durations corresponding to each sub-link.

It should be understood that for the second sidelink, due to different numbers and/or types of relay terminals, the number and/or the durations of sub-links may be different, and the corresponding duration of the timer may also be different. For example, for the second sidelink of "first terminal-relay terminal A-second terminal" and the second sidelink of "first terminal-relay terminal B-second terminal", although the number of sub-links is identical, the corresponding durations of the timer are different due to different durations of sub-links.

In some embodiments, the target duration for the timer may be determined according to the number of relay terminals included in the second sidelink and the correspondence relationship between different numbers of relay terminals and durations of the timer.

According to the number of relay terminals included in the second sidelink, the target duration for the timer may be determined according to the correspondence relationship between different numbers of relay terminals and durations of the timer.

It is worth noting that the correspondence relationship between different numbers of relay terminals and durations of the timer means that different numbers of relay terminals correspond to different durations of the timer. For example, for the second sidelink of "first terminal-relay terminal A-relay terminal B-second terminal", the number of relay terminals is 2. For the second sidelink of "first terminal-relay terminal A-second terminal", the number of relay terminals is 1. Therefore, the duration of the timer corresponding to the second sidelink of "first terminal-relay terminal A-relay terminal B-second terminal" is different from the duration of the timer corresponding to the second sidelink of "first terminal-relay terminal A-second terminal". For the second sidelink of "first terminal-relay terminal A-second terminal" and the second sidelink of "first terminal-relay terminal B-second terminal", because the numbers of relay terminals are the same, they correspond to the same duration of the timer.

It should be understood that the correspondence relationship between different numbers of relay terminals and durations of the timer may be pre-configured, or obtained according to a system message sent by a network device, or obtained according to an RRC reconfiguration message sent by a network device.

At step 720, the timer is configured according to the target duration for the timer.

Configuring the timer according to the target duration for the timer is setting the timing duration of the timer to the target duration and starting the timer. The timer is used for indicating that an RLF occurs in the sidelink in a case of expiry. In some embodiments, the timer is a T400 timer.

It should be understood that with regard to how the timer indicates that an RLF occurs in the sidelink in a case of expiry reference may be made to the related description of step 320 in the embodiment shown in FIG. 3, which is not repeated here.

It is worth noting that every time the first terminal sends the first RRC message to the second terminal through the first sidelink, the target duration for the timer is determined according to the first sidelink of the first RRC message. Certainly, when the first terminal sends the first RRC message to the second terminal for the first time, the target duration for the timer may be determined according to the first sidelink of the first RRC message, and before the first terminal sends the first RRC message to the second terminal again, the target duration for the timer may be determined according to a duration sent by the second terminal.

Therefore, in a case that the transmission path of the first RRC message is the second sidelink, the target duration for the timer corresponding to the second sidelink is determined according to the type of relay terminal or the number of relay terminals included in the second sidelink, and the target duration for the timer can be determined respectively for different second sidelinks, so that the timing duration of the timer matches the duration of sending the first RRC message through the second sidelink, so as to avoid early or delayed triggering of sidelink RLF.

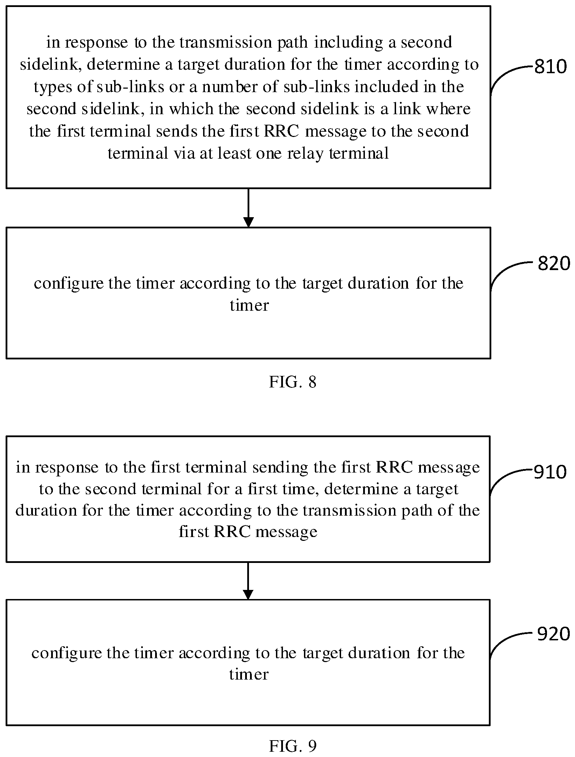

FIG. 8 is a flowchart illustrating a sidelink configuration method according to some embodiments. As illustrated in FIG. 8, the sidelink configuration method includes the following steps.

At step 810, in response to the transmission path of the first RRC message including a second sidelink, the target duration for the timer is determined according to types of sub-links or a number of sub-links included in the second sidelink, in which the second sidelink is a link where the first terminal sends the first RRC message to the second terminal via at least one relay terminal.

With regard to the definition of the first RRC message reference may be made to the relevant description in step 310 of the embodiment shown in FIG. 3, which is not repeated here.

The second sidelink refers to a link where the first terminal sends the first RRC message to the second terminal through at least one relay terminal. In the second sidelink, the first terminal maintains a unicast connection with the second terminal through at least one relay terminal. Certainly, in some cases, the second sidelink may also be called as an indirect sidelink.

The type of sub-link refers to the types of two terminals that constitute a sub-link. For different sub-links, because the terminals that constitute each sub-link are different, the type of the corresponding sub-link is different. For example, for the second sidelink of "first terminal-relay terminal A-relay terminal B-second terminal", the types of sub-links include "first terminal-relay terminal A", "relay terminal A-relay terminal B" and "relay terminal B-second terminal".

In some embodiments, the target duration for the timer may be determined according to the types of sub-links included in the second sidelink and the correspondence relationship between different types of sub-links and durations of the timer.

According to the types of sub-links included in the second sidelink, the target duration for the timer is determined according to the correspondence relationship between different types of sub-links and durations of the timer.

It is worth noting that the second sidelink may be distinguished according to the types of sub-links included in the second sidelink. For example, for the second sidelink of "first terminal-relay terminal A-relay terminal B-second terminal", the types of sub-links include "first terminal-relay terminal A", "relay terminal A-relay terminal B" and "relay terminal B-second terminal", so that the types of sub-links including "first terminal-relay terminal A", "relay terminal A-relay terminal B" and "relay terminal B-second terminal" correspond to a duration of the timer. For the second sidelink of "first terminal-relay terminal A-second terminal", the types of sub-links include "first terminal-relay terminal A" and "relay terminal A-second terminal", so that the types of sub-links including "first terminal-relay terminal A" and "relay terminal A-second terminal" correspond to a duration of the timer.

For example, the correspondence relationship between different types of sub-links and durations of the timer may be pre-configured, or obtained according to a system message sent by a network device, or obtained according to an RRC reconfiguration message sent by a network device.

In some examples, the correspondence relationship between different types of sub-links and durations of the timer may be obtained through the following steps: determining sub-links included in the second sidelink according to types of sub-links; determining a corresponding duration of the timer according to a duration corresponding to the sub-link; and obtaining the correspondence relationship according to the determined duration of the timer and the type of relay terminal.

For example, for the second sidelink of "first terminal-relay terminal A-relay terminal B-second terminal", the types of sub-links included in the second sidelink are "first terminal-relay terminal A", "relay terminal A-relay terminal B" and "relay terminal B-second terminal". The duration corresponding to each sub-link may be different, so the duration of the timer corresponding to the second sidelink may be obtained according to a sum of durations corresponding to each sub-link.

In some embodiments, the target duration for the timer may be determined according to the number of sub-links included in the second sidelink and the correspondence relationship between different numbers of sub-links and durations of the timer.

According to the number of sub-links included in the second sidelink, the target duration for the timer may be determined according to the correspondence relationship between different numbers of sub-links and durations of the timer.

It is worth noting that the correspondence relationship between different numbers of sub-links and durations of the timer means that different numbers of sub-links correspond to different durations of the timer. For example, for the second sidelink of "first terminal-relay terminal A-relay terminal B-second terminal", the number of sub-links is 3. For the second sidelink of "first terminal-relay terminal A-second terminal", the number of sub-links is 2. Therefore, the duration of the timer corresponding to the second sidelink of "first terminal-relay terminal A-relay terminal B-second terminal" is different from the duration of the timer corresponding to the second sidelink of "first terminal-relay terminal A-second terminal". For the second sidelink of "first terminal-relay terminal A-second terminal" and the second sidelink of "first terminal-relay terminal B-second terminal", because the numbers of sub-links are the same, they correspond to the same duration of the timer.

It should be understood that the correspondence relationship between different numbers of sub-links and durations of the timer may be pre-configured, or obtained according to a system message sent by a network device, or obtained according to an RRC reconfiguration message sent by a network device.

At step 820, the timer is configured according to the target duration for the timer.

Configuring the timer according to the target duration for the timer is setting the timing duration of the timer to the target duration and starting the timer. The timer is used for indicating that an RLF occurs in the sidelink in a case of expiry. In some embodiments, the timer is a T400 timer.

It should be understood that with regard to how the timer indicates that an RLF occurs in the sidelink in a case of expiry reference may be made to the related description of step 320 in the embodiment shown in FIG. 3, which is not repeated here.

It is worth noting that every time the first terminal sends the first RRC message to the second terminal through the first sidelink, the target duration for the timer is determined according to the first sidelink of the first RRC message. Certainly, when the first terminal sends the first RRC message to the second terminal for the first time, the target duration for the timer may be determined according to the first sidelink of the first RRC message, and before the first terminal sends the first RRC message to the second terminal again, the target duration for the timer may be determined according to a duration sent by the second terminal.

Therefore, in a case that the transmission path of the first RRC message is the second sidelink, the target duration for the timer is determined according to the types of sub-links or the number of sub-links included in the second sidelink. The target duration for the timer can be configured pertinently for different second sidelinks, so that the duration of the timer matches the duration of sending the first RRC message through the second sidelink, so as to avoid early or delayed triggering of sidelink RLF.

FIG. 9 is a flowchart illustrating a sidelink configuration method according to some embodiments. As illustrated in FIG. 9, the sidelink configuration method includes the following steps.

At step 910, in response to the first terminal sending the first RRC message to the second terminal for a first time, the target duration for the timer is determined according to the transmission path of the first RRC message.

With regard to the definition of the first RRC message reference may be made to the relevant description in step 310 of the embodiment shown in FIG. 3, which is not repeated here.

When the first terminal sends the first RRC message to the second terminal for the first time, the first terminal determines the target duration for the timer corresponding to the transmission path according to the transmission path of the first RRC message. It should be understood that the first terminal sends the first RRC message to the second terminal for the first time means that the first terminal sends the RRC message to the second terminal for the first time. When the first terminal receives the message fed back by the second terminal in response to the first RRC message, the first terminal sends the first RRC message to the second terminal, which is not the first time to send the first RRC message.

There are at least two types of transmission paths of the first RRC message, namely, a first sidelink and a second sidelink. The first sidelink refers to a link where the first terminal directly sends the first RRC message to the second terminal. In the first sidelink, the first terminal directly maintains a unicast connection with the second terminal. Certainly, in some cases, the first sidelink may also be called as a direct sidelink. It is worth noting that the first terminal directly sends the first RRC message to the second terminal means that the first terminal sends the first RRC message to the second terminal without relay terminal. The second sidelink refers to a link where the first terminal sends the first RRC message to the second terminal through at least one relay terminal. In the second sidelink, the first terminal maintains a unicast connection with the second terminal through at least one relay terminal. Certainly, in some cases, the second sidelink may also be called as an indirect sidelink.

For different transmission paths of the first RRC message, the target duration for the timer is different. It is worth noting that the target duration for the timer may indicate how long it took for the first terminal to send a first RRC message and receive an RRC message fed back by the second terminal on the transmission path.

In some embodiments, the target duration for the timer corresponding to the transmission path of the first RRC message may be determined according to the correspondence relationship between different types of transmission paths and durations of the timer.

In some embodiments, in a case that the transmission path includes the first sidelink, the target duration for the timer corresponding to the transmission path of the first RRC message is determined according to the correspondence relationship between the first sidelink and the duration of the timer.

In some embodiments, in a case that the transmission path includes the second sidelink, the target duration for the timer corresponding to the transmission path of the first RRC message is determined according to the correspondence relationship between the second sidelink and the duration of the timer.

In some embodiments, in a case that the transmission path includes the second sidelink, the target duration for the timer is determined according to a type of relay terminal or a number of relay terminals included in the second sidelink.

In some embodiments, in a case that the transmission path includes the second sidelink, the target duration for the timer is determined according to types of sub-links or a number of sub-links included in the second sidelink.

At step 920, the timer is configured according to the target duration for the timer.

Configuring the timer according to the target duration for the timer is setting the timing duration of the timer to the target duration and starting the timer. The timer is used for indicating that an RLF occurs in the sidelink in a case of expiry. In some embodiments, the timer is a T400 timer.

It should be understood that with regard to how the timer indicates that an RLF occurs in the sidelink in a case of expiry reference may be made to the related description of step 320 in the embodiment shown in FIG. 3, which is not repeated here.

Therefore, the target duration for the timer is determined according to the transmission path of the first RRC message, and the duration of the timer is configured according to the target duration for the timer, so that the duration of the timer matches the duration of sending the first RRC message through the first sidelink, so as to avoid early or delayed triggering of sidelink RLF.

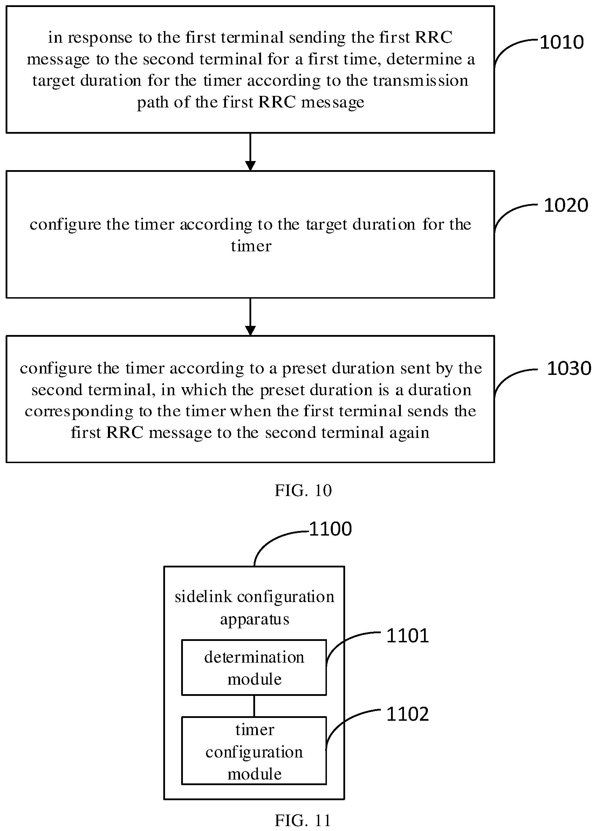

FIG. 10 is a flowchart illustrates a sidelink configuration method according to some embodiments. As illustrated in FIG. 10, the sidelink configuration method includes the following steps.

At step 1010, in response to the first terminal sending the first RRC message to the second terminal for a first time, the target duration for the timer corresponding to the transmission path is determined according to the transmission path of the first RRC message.

With regard to the definition of the first RRC message reference may be made to the relevant description in step 310 of the embodiments shown in FIG. 3, which is not repeated here.

When the first terminal sends the first RRC message to the second terminal for the first time, the first terminal determines the target duration for the timer corresponding to the transmission path according to the transmission path of the first RRC message. It should be understood that the first terminal sends the first RRC message to the second terminal for the first time means that the first terminal sends the RRC message to the second terminal for the first time. When the first terminal receives the message fed back by the second terminal in response to the first RRC message, the first terminal sends the first RRC message to the second terminal, which is not the first time to send the first RRC message.

There are at least two types of transmission paths of the first RRC message, namely, a first sidelink and a second sidelink. The first sidelink refers to a link where the first terminal directly sends the first RRC message to the second terminal. In the first sidelink, the first terminal directly maintains a unicast connection with the second terminal. Certainly, in some cases, the first sidelink may also be called as a direct sidelink. It is worth noting that the first terminal directly sends the first RRC message to the second terminal means that the first terminal sends the first RRC message to the second terminal without relay terminal. The second sidelink refers to a link where the first terminal sends the first RRC message to the second terminal through at least one relay terminal. In the second sidelink, the first terminal maintains a unicast connection with the second terminal through at least one relay terminal. Certainly, in some cases, the second sidelink may also be called as an indirect sidelink.

For different transmission paths of the first RRC message, the target durations of the timer may be determined to be different. It is worth noting that the target duration for the timer may indicate how long it takes for completing sending the first RRC message and receiving the RRC message fed back by the second terminal on the transmission path.

In some embodiments, the target duration for the timer corresponding to the transmission path of the first RRC message may be determined according to the correspondence relationship between different types of transmission paths and durations of the timer.

In some embodiments, in a case that the transmission path includes the first sidelink, the target duration for the timer corresponding to the transmission path of the first RRC message is determined according to the correspondence relationship between the first sidelink and the duration of the timer.

In some embodiments, in a case that the transmission path includes the second sidelink, the target duration for the timer corresponding to the transmission path of the first RRC message is determined according to the correspondence relationship between the second sidelink and the duration of the timer.

In some embodiments, in a case that the transmission path includes the second sidelink, the target duration for the timer is determined according to a type of relay terminal or a number of relay terminals included in the second sidelink.

In some embodiments, in a case that the transmission path includes the second sidelink, the target duration for the timer is determined according to types of sub-links or a number of sub-links included in the second sidelink.

At step 1020, the timer is configured according to the target duration for the timer.

Configuring the timer according to the target duration for the timer is setting the timing duration of the timer to the target duration and starting the timer. The timer is used for indicating that an RLF occurs in the sidelink in a case of expiry. In some embodiments, the timer is a T400 timer.

It should be understood that with regard to how the timer indicates that an RLF occurs in the sidelink in a case of expiry reference may be made to the related description of step 320 in the embodiment shown in FIG. 3, which is not repeated here.

At step 1030, the timer is configured according to a preset duration sent by the second terminal, in which the preset duration is a duration corresponding to the timer when the first terminal sends the first RRC message to the second terminal again.

When the first terminal sends the first RRC message to the second terminal again, the first terminal configures the timer according to the preset duration sent by the second terminal.

The first terminal sends the first RRC message to the second terminal again means that the first terminal sends the first RRC message to the second terminal in a case that the first terminal receives a message fed back by the second terminal in response to the first RRC message.

For example, when the first terminal sends the first RRC message to the second terminal for the first time, the first terminal determines the target duration for the timer according to the transmission path of the first RRC message, and configures the duration of the timer as the target duration for the timer. When the first terminal receives an RRCReconfigurationFailureSidelink message fed back by the second terminal in response to the first RRC message, the first terminal sends the first RRC message to the second terminal again. At this time, the duration of the timer is configured as the preset duration sent by the second terminal.

In some embodiments, the preset duration may be sent by the second terminal to the first terminal through a second RRC message.

The second RRC message may be an RRC reconfiguration message. The RRC reconfiguration message may be a sidelink RRC reconfiguration message.

Therefore, when the first terminal sends the first RRC message to the second terminal for the first time, the target duration for the timer is determined according to the transmission path of the first RRC message, and the duration of the timer is configured according to the target duration for the timer. When the first terminal sends the first RRC message to the second terminal again, the duration of the timer is configured according to the preset duration sent by the second terminal, so that the duration of the timer matches the transmission path of the first RRC message, so as to avoid early or delayed triggering of sidelink RLF.

FIG. 11 is a block diagram of a sidelink configuration apparatus according to some embodiments. As illustrated in FIG. 11, the apparatus 1100 is applied to a first terminal. The apparatus 1100 includes:
a determination module 1101, configured to determine a target duration for a timer according to a transmission path of a first RRC message, in which the first RRC message is a sidelink message sent by the first terminal to a second terminal, and the timer is used for indicating that a radio link failure occurs in the sidelink in a case of expiry; and
a timer configuration module 1102, configured to configure the timer according to the target duration for the timer.

Optionally, the determination module 1101 includes:
a first determining sub-unit, configured to determine the target duration for the timer according to a correspondence relationship between different types of transmission paths and durations of the timer.

Optionally, the first determining sub-unit includes:
a first duration unit, configured to, in response to the transmission path including a first sidelink, determine the target duration for the timer according to a correspondence relationship between the first sidelink and a duration of the timer, in which the first sidelink is a link where the first terminal directly sends the first RRC message to the second terminal.

Optionally, the first determining sub-unit includes:
a second duration unit, configured to, in response to the transmission path including a second sidelink, determine the target duration for the timer according to a correspondence relationship between the second sidelink and a duration of the timer, in which the second sidelink is a link where the first terminal sends the first RRC message to the second terminal via at least one relay terminal.

Optionally, the determination module 1101 includes:
a second determination sub-unit, configured to, in response to the transmission path including a second sidelink, determine the target duration for the timer according to a type of relay terminal or a number of relay terminals included in the second sidelink, in which the second sidelink is a link where the first terminal sends the first RRC message to the second terminal via at least one relay terminal.

Optionally, the determination module 1101 includes:
a third determination sub-unit, configured to, in response to the transmission path including a second sidelink, determine the target duration for the timer according to types of sub-links or a number of sub-links included in the second sidelink, in which the second sidelink is a link where the first terminal sends the first RRC message to the second terminal via at least one relay terminal.

Optionally, the determination module 1101 includes:
a fourth determination sub-unit, configured to, in response to the first terminal sending the first RRC message to the second terminal for a first time, determine the target duration for the timer according to the transmission path of the first RRC message.

Optionally, the timer configuration module 1102 is further configured to:
configure the timer according to a preset duration sent by the second terminal, in which the preset duration is a duration corresponding to the timer when the first terminal sends the first RRC message to the second terminal again.

Optionally, the preset duration is sent by the second terminal to the first terminal through a second RRC message.

Optionally, the first determination sub-unit includes at least one of:
a first receiving unit, configured to obtain a correspondence relationship between different types of transmission paths and durations of the timer according to a system message sent by a network device;
a second receiving unit, configured to obtain a correspondence relationship between different types of transmission paths and durations of the timer according to an RRC reconfiguration message sent by the network device; or
a third receiving unit, configured to obtain a correspondence relationship between different types of transmission paths and durations of the timer by preconfiguring different durations of the timer for different types of transmission paths.

Optionally, the timer is a T400 timer.

Optionally, the first RRC message is a sidelink RRC reconfiguration message.

With regard to the apparatus in the above embodiments, the specific way in which each module performs operations has been described in detail in the embodiments of the methods, and will not be described in detail here.

The disclosure also provides a computer-readable storage medium having computer program instructions stored thereon. When the computer program instructions are executed by a processor, the steps of the sidelink configuration method provided by the disclosure are implemented.

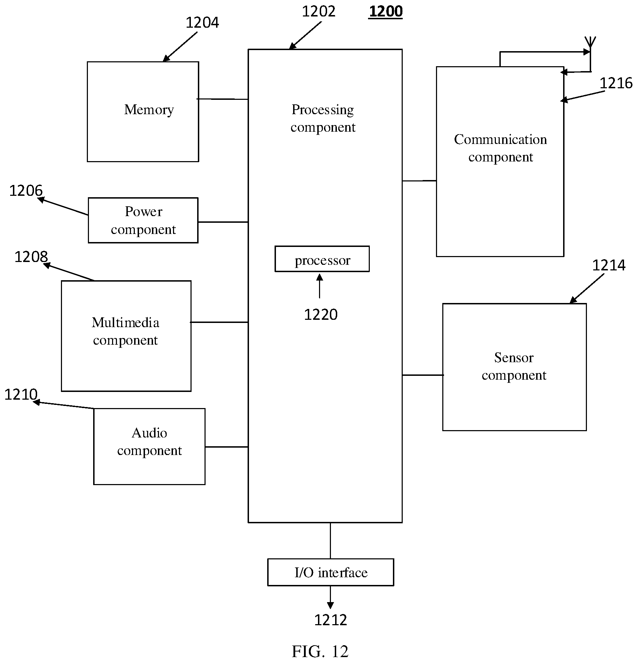

FIG. 12 is a block diagram of a terminal illustrated according to some embodiments. For example, the terminal 1200 may be a mobile phone, a computer, a digital broadcast terminal, a message transceiver device, a game console, a tablet device, a medical device, a fitness device, a personal digital assistant or a smart car.

As illustrated in FIG. 12, the terminal 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the terminal 1200, such as the operations associated with display, telephone calls, data communications, camera operations, and recording operations. The processing component 1202 may include one or more processors1220 to perform all or part of the steps in the sidelink configuration method described above. Moreover, the processing component 1202 may include one or more modules which facilitate the interaction between the processing component 1202 and other components. For example, the processing component 1202 may include a multimedia module to facilitate the interaction between the multimedia component 1208 and the processing component 1202.

The memory 1204 is configured to store various types of data to support the operation of the terminal 1200. Examples of such data include instructions for any applications or methods operated on the terminal 1200, contact data, phonebook data, messages, pictures, video, etc. The memory 1204 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 1206 provides power to various components of the terminal 1200. The power component 1206 may include a power management system, one or more power sources, and any other components associated with the generation, management, and distribution of power in the terminal 1200.

The multimedia component 1208 includes a screen providing an output interface between the terminal 1200 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a period of wakeup time and a pressure associated with the touch or swipe action. In some embodiments, the multimedia component 1208 includes a front-facing camera and/or a rear-facing camera. When the terminal 1200 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 1210 is configured to output and/or input audio signals. For example, the audio component 1210 includes a microphone (MIC) configured to receive an external audio signal when the terminal 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as a keyboard, a click wheel, buttons, and the like. The buttons may include, but are not limited to, a home button, a volume button, a starting button, and a locking button.

The sensor component 1214 includes one or more sensors to provide status assessments of various aspects of the terminal 1200. For instance, the sensor component 1214 may detect an open/closed status of the terminal 1200, relative positioning of components, e.g., the display and the keypad, of the terminal 1200, a change in position of the terminal 1200 or a component of the terminal 1200, a presence or absence of user contact with the terminal 1200, an orientation or an acceleration/deceleration of the terminal 1200, and a change in temperature of the terminal 1200. The sensor component 1214 may include a proximity sensor configured to detect the presence of nearby objects without any physical contact. The sensor component 1214 may also include a light sensor, such as a Complementary Metal Oxide Semiconductor (CMOS) or Charge-Coupled Device (CCD) image sensor, for use in imaging applications. In some embodiments, the sensor component 1214 may also include an accelerometer sensor, a gyroscope sensor, a magnetic sensor, a pressure sensor, or a temperature sensor.

The communication component 1216 is configured to facilitate communication, wired or wirelessly, between the terminal 1200 and other devices. The terminal 1200 can access a wireless network based on a communication standard, such as Wi-Fi, 2G or 3G, or a combination thereof. In an exemplary embodiment, the communication component 1216 receives a broadcast signal or broadcast associated information from an external broadcast management system via a broadcast channel. In an exemplary embodiment, the communication component 1216 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In some exemplary embodiments, the terminal 1200 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the sidelink configuration method described above.

In some exemplary embodiments, there is also provided a non-transitory computer readable storage medium including instructions, such as the memory 1204, executable by the processor 1220 in the terminal 1200, for performing the sidelink configuration method described above. For example, the non-transitory computer-readable storage medium may be a ROM, a Random Access Memory (RAM), a CD-ROM, a magnetic tape, a floppy disc, and an optical data storage device.

In another exemplary embodiment, there is also provided a computer program product. The computer program product includes computer programs executable by a programmable device. The computer program includes a code portion for executing the above-mentioned sidelink configuration method when executed by the programmable device.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as illustrative only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the attached claims.

## Claims

1. A sidelink configuration method, performed by a first terminal, comprising:
determining a target duration for a timer according to a transmission path of a first radio resource control (RRC) message, wherein the first RRC message is a sidelink message sent by the first terminal to a second terminal, and the timer is used for indicating that a radio link failure occurs in the sidelink in a case of expiry; and
configuring the timer according to the target duration for the timer.

2. The method of claim 1, wherein determining the target duration for the timer according to the transmission path of the first RRC message comprises:
determining the target duration for the timer according to a correspondence relationship between different types of transmission paths and durations of the timer.

3. The method of claim 2, wherein determining the target duration for the timer according to the correspondence relationship between different types of transmission paths and durations of the timer comprises:
in response to the transmission path comprising a first sidelink, determining the target duration for the timer according to a correspondence relationship between the first sidelink and a duration of the timer, wherein the first sidelink is a link where the first terminal directly sends the first RRC message to the second terminal.

4. The method of claim 2, wherein determining the target duration for the timer according to the correspondence relationship between different types of transmission paths and durations of the timer comprises:
in response to the transmission path comprising a second sidelink, determining the target duration for the timer according to a correspondence relationship between the second sidelink and a duration of the timer, wherein the second sidelink is a link where the first terminal sends the first RRC message to the second terminal via at least one relay terminal.

5. The method of claim 1, wherein determining the target duration for the timer according to the transmission path of the first RRC message comprises:
in response to the transmission path comprising a second sidelink, determining the target duration for the timer according to a type of relay terminal or a number of relay terminals comprised in the second sidelink, wherein the second sidelink is a link where the first terminal sends the first RRC message to the second terminal via at least one relay terminal.

6. The method of claim 1, wherein determining the target duration for the timer according to the transmission path of the first RRC message comprises:
in response to the transmission path comprising a second sidelink, determining the target duration for the timer according to types of sub-links or a number of sub-links comprised in the second sidelink, wherein the second sidelink is a link where the first terminal sends the first RRC message to the second terminal via at least one relay terminal.

7. The method of claim 1, wherein determining the target duration for the timer according to the transmission path of the first RRC message comprises:
in response to the first terminal sending the first RRC message to the second terminal for a first time, determining the target duration for the timer according to the transmission path of the first RRC message.

8. The method of claim 7, wherein after determining the target duration for the timer according to the transmission path of the first RRC message, the method further comprises:
configuring the timer according to a preset duration sent by the second terminal, wherein the preset duration is a duration corresponding to the timer when the first terminal sends the first RRC message to the second terminal again.

9. The method of claim 8, wherein the preset duration is sent by the second terminal to the first terminal through a second RRC message.

10. The method of claim 2, wherein the correspondence relationship is obtained by at least one of following steps:
obtaining the correspondence relationship between different types of transmission paths and durations of the timer according to a system message sent by a network device;
obtaining the correspondence relationship between different types of transmission paths and durations of the timer according to an RRC reconfiguration message sent by the network device; or
obtaining the correspondence relationship between different types of transmission paths and durations of the timer by preconfiguring different durations of the timer for different types of transmission paths.

11. The method of any one of claims 1-10, wherein the timer is a T400 timer.

12. The method of any one of claims 1-10, wherein the first RRC message is a sidelink RRC reconfiguration message.

13. A sidelink configuration apparatus, applied to a first terminal, comprising:
a determination module, configured to determine a target duration for a timer according to a transmission path of a first radio resource control (RRC) message, wherein the first RRC message is a sidelink message sent by the first terminal to a second terminal, and the timer is used for indicating that a radio link failure occurs in the sidelink in a case of expiry; and
a timer configuration module, configured to configure the timer according to the target duration for the timer.

14. A terminal, comprising:
a processor;
a memory for storing instructions executable by the processor;
wherein the processor is configured to execute the instructions to implement the sidelink configuration method according to any one of claims 1-12.

15. A computer-readable storage medium having stored thereon computer program instructions, wherein when the computer program instructions are executed by a processor, the steps of the sidelink configuration method according to any one of claims 1-12 are implemented.
